# EUROPÄISCHE PATENTSCHRIFT

(11) **EP 2 643 193 B1**
(45) Veröffentlichungstag und Bekanntmachung des Hinweises auf die Patenterteilung: **27.05.2020**
(21) Anmeldenummer: 11775932.4
(22) Anmeldetag: 17.10.2011
(51) Int. Cl.: B60S 1/38

(54) **WISCHBLATT**
WIPER BLADE
BALAI D'ESSUIE-GLACE

(30) Priorität: 24.11.2010 DE 102010061822
(43) Veröffentlichungstag der Anmeldung: 02.10.2013
(73) Patentinhaber: Robert Bosch GmbH, 70442 Stuttgart (DE)
(72) Erfinder: TUYLS, Guido, B-3380 Bunsbeek (BE); CAMPS, Johan, B-3380 Bunsbeek (BE); BRATEC, Hervé, B-3012 Wilsele (BE); WILMS, Christian, BE-3582 Beringen-Koersel (BE)
(86) Internationale Anmeldenummer: PCT/EP2011/068102
(87) Internationale Veröffentlichungsnummer: WO 2012/069258

(56) Entgegenhaltungen:
- WO-A1-2010/006776
- WO-A1-2011/101062
- DE-A1- 19 856 300
- DE-A1-102005 050 569
- FR-A1- 2 530 562
- FR-A1- 2 911 834
- FR-A1- 2 923 785

## Beschreibung

### Stand der Technik

Die Erfindung geht von einem Wischblatt nach dem Oberbegriff des Anspruchs 1 aus.

Aus der DE 100 44 913 A1 ist ein Wischblatt in Flachbalkenbauweise zum Reinigen von Scheiben, insbesondere von Kraftfahrzeugen, bekannt, bei dem eine Wischleiste mit einer Wischlippe mittels eines Tragelements in Form zweier parallel in einer Ebene zueinander verlaufender Federschienen gehalten ist. Die Federschienen sind in zwei Längsnuten, die durch einen Steg voneinander getrennt sind, in Längsnuten einer Kopfleiste der Wischleiste eingesetzt. Damit die Wischleiste den Krümmungen einer Fahrzeugscheibe folgen kann, sind die elastischen Federschienen zur Wischlippe hin konkav vorgekrümmt, sodass die Wischleiste im unbelasteten Zustand nur mit ihren Enden an der Fahrzeugscheibe anliegt. Die Wischleisten stehen ein Stück weit seitlich aus den Längsnuten vor, sodass an den vorstehenden Teilen der Federschienen im mittleren Bereich des Wischblatts ein Anschlusselement zum gelenkigen Verbinden des Wischblatts mit einem Wischarm befestigt werden kann. In Längsrichtung zu beiden Seiten des Anschlusselements sind ebenfalls an den vorstehenden Teilen der Federschienen Spoilerteile mittels Führungsprofilen geführt, an die sich auf einer Anströmseite eine Anströmfläche anschließt, die mit einem Schenkel auf der Abströmseite des Spoilerteils einen im Wesentlichen dreieckigen Querschnitt bildet. Das Führungsprofil auf der Abströmseite steht ein Stück weit seitlich gegenüber dem Schenkel auf der Abströmseite vor und bildet mit diesem an der Schnittkante eine Kehle. An den Enden des Wischblatts werden die Spoilerteile von Endkappen abgedeckt, die ebenfalls auf dem Tragelement geführt sind.

Aus der DE 101 20 467 A1 ist ein ähnliches Wischblatt bekannt, das neben einer Ausführung des Tragelements mit zwei parallel zueinander verlaufenden, elastischen Federschienen eine Ausführung des Tragelements mit nur einer Federschiene zeigt, die in einem Längskanal einer Kopfleiste der Wischleiste untergebracht ist. An dieser sind die Spoilerteile angeformt. Auch hierbei werden auf der Abströmseite der Spoilerteile zwischen diesen und den angrenzenden Führungsprofilen Kehlen gebildet.

Aus der WO 2010/006776 ist ein Wischblatt in Flachbalkenbauweise bekannt, das einen Träger besitzt. Dieser nimmt in einem Längsmittelkanal eine Federschiene auf. Ferner besitzt er an der der einer Wischleiste zugewandten Seite ein Aufnahmeprofil, das eine Kopfleiste der Wischleiste seitlich und teilweise von unten umfasst. Das Wischblatt besitzt ferner einen Spoiler mit einem Führunqsprofil_{,} das die vom Träger eingeschlossene Federschiene seitlich umfasst. Er besitzt eine von der äußeren Längsseite des Führungsprofils zunächst gering ansteigende Anströmseite und eine steil, etwa senkrecht zur Fahrzeugscheibe abfallende Abströmseite. Das Führungsprofil auf der Abströmseite steht ein Stück weit über das Abströmprofil vor und bildet mit diesem eine längs verlaufende Kehle. An den nach außen weisenden Längsseiten des Führungsprofils schließen sich perforierte Wasserleitung an, durch die Waschmittel im Bedarfsfall auf die Fahrzeugscheibe gespritzt wird. Der Spoiler ist in zwei Spoilerteile untereilt, die durch eine Verbindung in der Mitte zusammengefügt sind. Die Wasserleitungen der Spoiler sind an diesen angeformt und besitzen an ihren Längsseiten eine abgerundete, zur Fahrzeugscheibe hin stark abfallende Außenkontur.

Ferner zeigt die WO 2011/101062, die vor dem internationalen Anmeldedatum, aber nach dem beanspruchten Prioritätsdatum veröffentlicht worden ist, ein Wischblatt in Flachbalkenbauweise und einen Spoiler, der sich zu beiden Seiten eines im mittleren Bereich montierten Adapters erstreckt. Das Wischblatt besitzt ferner ein Verbindungsstück, das mit einer Verbindungsleiste auf einer einer Wischblatthauptströmungsseite abgewandten Seite eine Leitrippe bildet, die in Längsrichtung zu beiden Seiten des Anschlusselements mittels Halteelementen an den Spoilerteilen angehängt ist und an die zugeordneten Führungsprofilen anschließt.

Durch die Verbindunasleiste mit der Leitrippe können Flüssigkeitsbarrieren zumindest teilweise überbrückt werden, an denen Flüssigkeit, wie insbesondere Reinigungsflüssigkeit, während des Betriebs gestaut wird und in unerwünschterweise über das Wischblatt strömen könnte. Unerwünschte Spritzer auf der Windschutzscheibe können dadurch zumindest reduziert werden.

### Offenbarung der Erfindung

Nach der Erfindung weist das Führungsprofil auf der Abströmseite an seiner nach außen weisenden Längsseite eine Leitrippe auf. Bei der Aufwärtsbewegung während des Betriebs des Wischblatts strömt Wasser auf Grund der aerodynamischen Verhältnisse entlang des antriebsseitigen, inneren Spoilerteils in Richtung auf das Anschlusselement, wo es sich auf Grund von Wirbeln sammelt. Während der Fahrt und der Abwärtsbewegung des Wischblatts gelangt beim Stand der Technik das angesammelte Wasser als Sprühnebel und Wassertropfen auf die Fahrzeugscheibe, wodurch die Wischqualität beeinträchtigt wird. Durch die erfindungsgemäßen Maßnahmen soll verhindert werden, dass sich Wasser im Bereich des Anschlusselements durch Wirbel ansammeln und bei der Abwärtsbewegung des Wischblatts als Sprühnebel oder Tropfen auf die Fahrzeugscheibe gelangen kann. Hierzu dient die erfindungsgemäße Leitrippe in den verschiedenen Ausgestaltungen der Erfindung.

Je nach Strömungsverhältnissen am Fahrzeug kann sich die Leitrippe über die gesamte Länge des Wischblatts erstrecken oder sie kann nur an einer oder mehreren kritischen Stellen angeordnet sein. Nach einer Ausgestaltung der Erfindung, bei der zwei Spoilerteile vorgesehen sind, von denen ein inneres Spoilerteil von einem inneren Ende des Wischblatts bis zum Anschlusselement reicht, während sich ein äußeres Spoilerteil von einem äußeren Ende bis zum Anschlusselement erstreckt, wird vorgeschlagen, dass eines oder beide Spoilerteile jeweils ein Führungsprofil mit einer Leitrippe aufweisen. Gleichgültig, ob das innere oder äußere Spoilerteil eine Leitrippe aufweist, kann es vorteilhaft sein, dass dieses über den Bereich des Anschlusselements verlängert ist, sodass das Wasser in diesem Bereich nicht auf die Fahrzeugscheibe tropfen kann.

Wenn beide Spoilerteile auf der Abströmseite an den Führungsprofilen Leitrippen aufweisen, ist es zweckmäßig, dass mindestens eine der Leitrippen in dem Bereich des Anschlusselements verlängert ist. Ferner ist es zweckmäßig, dass die Oberseiten der Leitrippen mit den Oberseiten der Führungsprofile bündig abschließen.

In manchen Fällen mag es ausreichen, dass nur in dem Bereich des Anschlusselements Vorkehrungen getroffen werden, die verhindern, dass Wasser auf die Fahrzeugscheibe tropft. Diese Maßnahmen können allein oder in Verbindung mit den Leitrippen an den Spoilerteilen verwendet werden. So kann zum Beispiel in einem sich über das Anschlusselement erstreckenden Bereich ein Verbindungsstück eine Leitrippe bilden, das sich über Übergänge an die Führungsprofile der Spoilerteile oder an die Leitrippen der Spoilerteile anschließt. Eine solche Leitrippe kann gemäß einer weiteren Ausgestaltung der Erfindung durch eine Verbindungsleiste gebildet werden, die in Längsrichtung zu beiden Seiten des Anschlusselements mittels Halteelementen an den Spoilerteilen angehängt ist, wobei die Verbindungsleiste an die zugeordneten Führungsprofile bzw. an den Leitrippen der Führungsprofile anschließt. Dabei können in einer weiteren Ausgestaltung der Erfindung die Halteelemente als Anschlussprofile für die angrenzenden Spoilerteile ausgebildet sein. Die Anschlussprofile mit angeformten Übergangsprofilen decken das Anschlusselement nach oben zumindest teilweise ab.

Eine weitere Lösung besteht darin, dass das Anschlusselement mittels Führungsprofilen auf dem Tragelement geführt ist, wobei das auf der Abströmseite vorgesehene Führungsprofil gegenüber dem auf der Anströmseite vorgesehenen Führungsprofil in Längsrichtung verlängert ist und an seiner äußeren Längsseite eine zur Wischlippe weisende Schürze aufweist. Durch das verlängerte Führungsprofil mit seiner Schürze wird die Strömung im Bereich des Anschlusselements über die kritische Stelle geleitet, sodass Turbulenzen weitgehend vermieden werden.

Gemäß einer weiteren Ausgestaltung der Erfindung ist auf der Abströmseite oberhalb der Führungsprofile in Längsrichtung mindestens auf einer Seite des Anschlusselements ein Füllstück vorgesehen, das sich mit einem Übergang an die Abströmseite des zugeordneten Spoilerteils anschließt und bis zur Längsseitenbegrenzung des zugeordneten Führungsprofils oder der zugeordneten Leitrippe reicht. Das Füllstück oder die Füllstücke verhindern, dass sich in diesen kritischen Bereichen Wasser ansammelt oder Wirbel ausbilden, die eine derartige Wasseransammlung bewirken und somit Wasser auf die Fahrzeugscheibe sprühen. Die Strömung in diesen kritischen Bereichen kann ebenfalls durch Stege günstig beeinflusst werden, die gemäß einer weiteren Ausgestaltung der Erfindung an den Führungsprofilen auf der Abströmseite angeformt sind. Die Stege sind in Längsrichtung des Wischblatts mit Abstand zueinander angeordnet und verlaufen etwa senkrecht zur Fahrzeugscheibe. Dabei können die Abstände der Stege unterschiedlich sein und entsprechend dem Anwendungsfall variiert werden. Ebenfalls können die Anzahl der Stege und ihre Neigung zur Fahrzeugscheibe den Einsatzbedingungen angepasst werden.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
Fig. 1 eine perspektivische Teilansicht eines erfindungsgemäßen Wischblatts im Bereich eines Anschlusselements von unten,
Fig. 2 eine perspektivische Teilansicht eines inneren Endes eines erfindungsgemäßen Wischblatts nach Fig. 1 von oben,
Fig. 3 eine Variante zu Fig. 2,
Fig. 4 eine perspektivische Teilansicht eines äußeren Endes eines erfindungsgemäßen Wischblatts nach Fig. 1 von oben,
Fig. 5 eine Variante zu Fig. 1,
Fig. 6 eine weitere Variante zu Fig. 1,

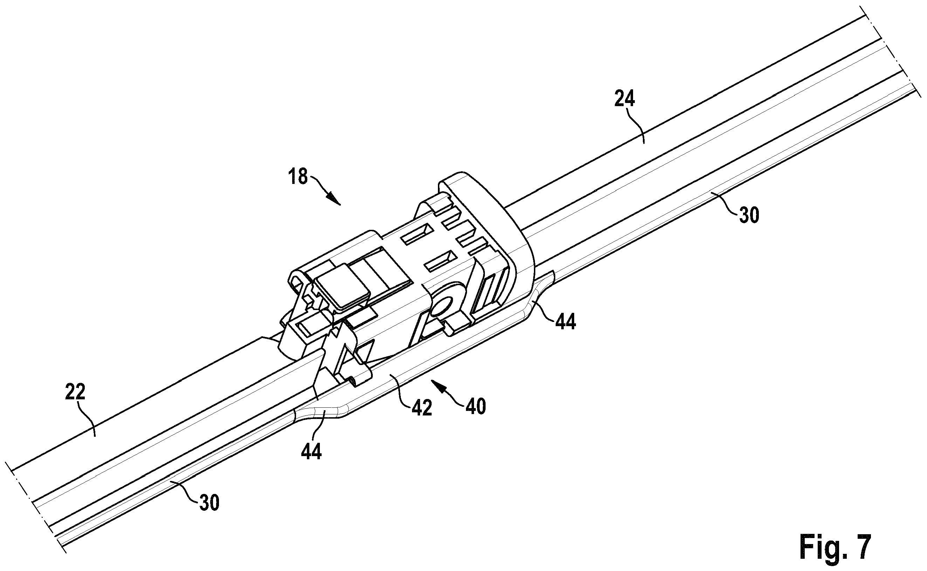

Fig. 7 eine weitere Variante zu Fig. 2,
Fig. 8 und Fig. 9 perspektivische Teilansichten im Bereich eines Anschlusselements von Varianten nach Fig. 2,
Fig. 10 eine perspektivische Ansicht eines Verbindungsstücks,
Fig. 11 eine perspektivische Teilansicht im Bereich eines Anschlusselements einer Variante nach Fig. 2 mit einer Verbindungsleiste,
Fig. 12 eine perspektivische Teilansicht im Bereich eines Anschlusselements und
Fig. 13 eine perspektivische Ansicht des Anschlusselements nach Fig. 12.

Bei einem Wischblatt 10 wird eine Wischleiste 12 durch ein Tragelement 14 in Form zweier parallel in einer Ebene zueinander verlaufender Federschienen gehalten. Das Tragelement 14 ist elastisch und zu einer Wischlippe 16 der Wischleiste 12 konkav vorgekrümmt, wobei die Krümmung stärker ist, als die stärkste Krümmung einer Fahrzeugscheibe 17, für die das Wischblatt 10 vorgesehen ist. Das Tragelement 14 kann aus einem Federstahl oder aus einem geeigneten Kunststoff gefertigt sein.

Anstelle von zwei Federschienen, kann das Tragelement 14 auch aus einer Federschiene bestehen, die in einem nicht dargestellten Längskanal der Wischleiste 12 untergebracht ist. Im mittleren Bereich des Wischblatts 10 ist an dem Tragelement 14 ein Anschlusselement 18 in geeigneter Weise, z. B. durch Krallen 20 befestigt, die das Tragelement 14 seitlich umfassen.

In Längsrichtung des Wischblatts 10 sind zu beiden Seiten des Anschlusselements 18 Spoilerteile 22, 24 mittels Führungsprofilen 30 auf den äußeren Randbereichen des Tragelements 14 geführt. Die Führungsprofile 30 bilden mit der Abströmseite 28 der Spoilerteile 22,24 eine Kehle 31. Das dem Antrieb des Wischblatts 10 näher gelegene, innere Spoilerteil trägt das Bezugszeichen 22, während das andere, äußere Spoilerteil durch das Bezugszeichen 24 gekennzeichnet ist. Die Enden der Spoilerteile 22, 24 sind durch Endkappen 38 abgedeckt, die an dem Tragelement 14 befestigt sind. Die Spoilerteile 22, 24 besitzen jeweils eine Anströmseite 26 auf die im Wesentlichen der Fahrtwind des Fahrzeugs trifft, während die andere Längsseite der Spoilerteile 22, 24 als Abströmseite 28 bezeichnet ist.

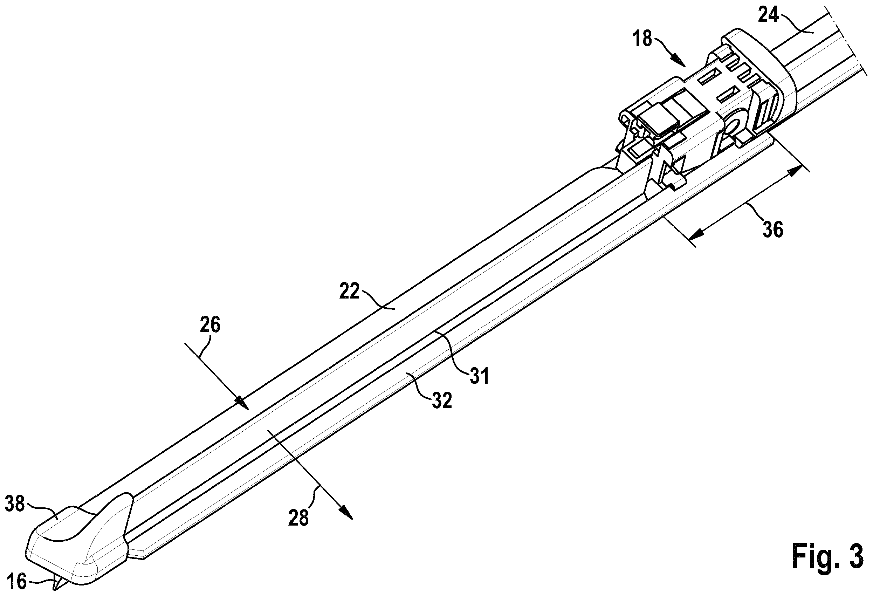

Während einer Aufwärtsbewegung des Wischblatts 10 fließt Wasser zum Anschlusselement 18, sammelt sich dort und wird bei einer Abwärtsbewegung versprüht und gelangt auf die Fahrzeugscheibe. Um dies zu verhindern, sind an den Führungsprofilen 30 auf der Abströmseite der Spoilerteile 22 bzw. 24 Leitrippen 32 vorgesehen, die über die Längsseiten der Führungsprofile 30 seitlich vorstehen und deren Oberseiten mit den Oberseiten der Führungsprofile 30 bündig abschließen. Die Leitrippen 32 reichen in den Ausführungsbeispielen von den Endkappen 38 bis zu dem Anschlusselement 18. Bei dem Ausführungsbeispiel nach Fig. 3 ist die Leitrippe 32 über einen Bereich 36 des Anschlusselements 18 verlängert. Je nach Anwendungsfall können die Leitrippen 32 bzw. 34 auch kürzer sein. Die Leitrippen 32, 34 bewirken, dass sich in dem Bereich des Anschlusselements 18 keine Wirbel ausbilden, die zu Wasseransammlungen führen und bei der Abwärtsbewegung des Wischblatts 10 das angesammelte Wasser auf die Fahrzeugscheibe 17 sprühen.

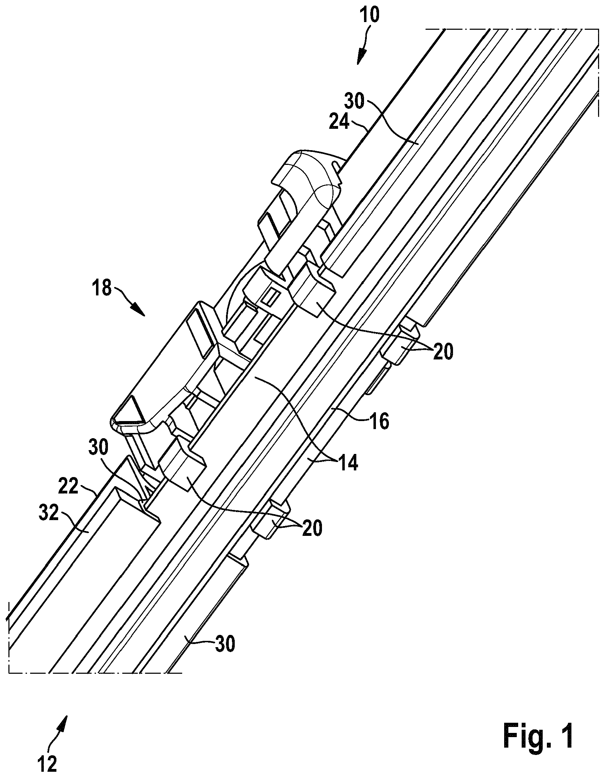

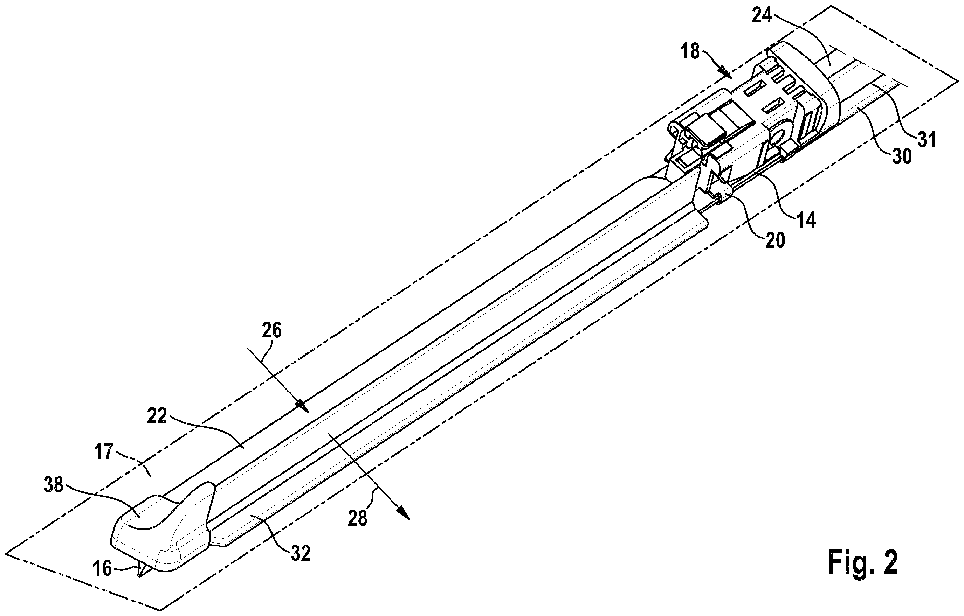

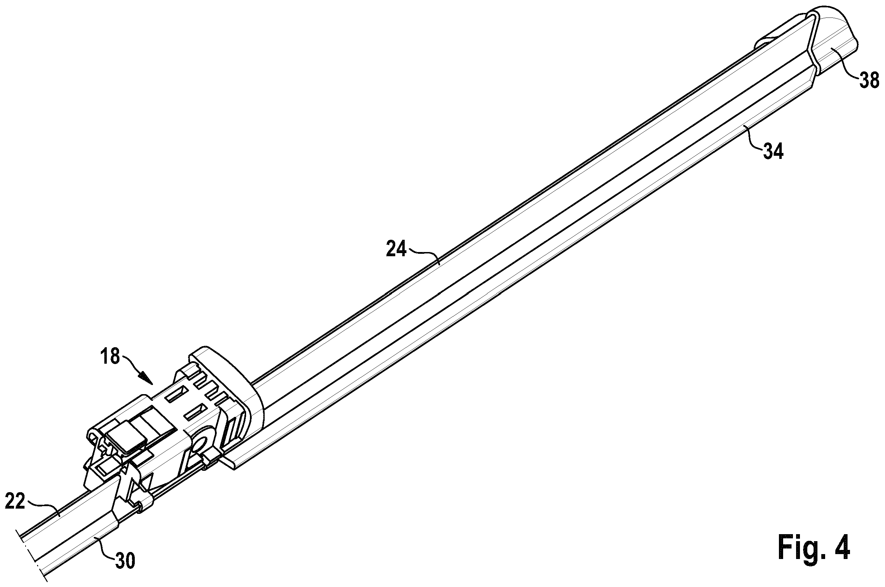

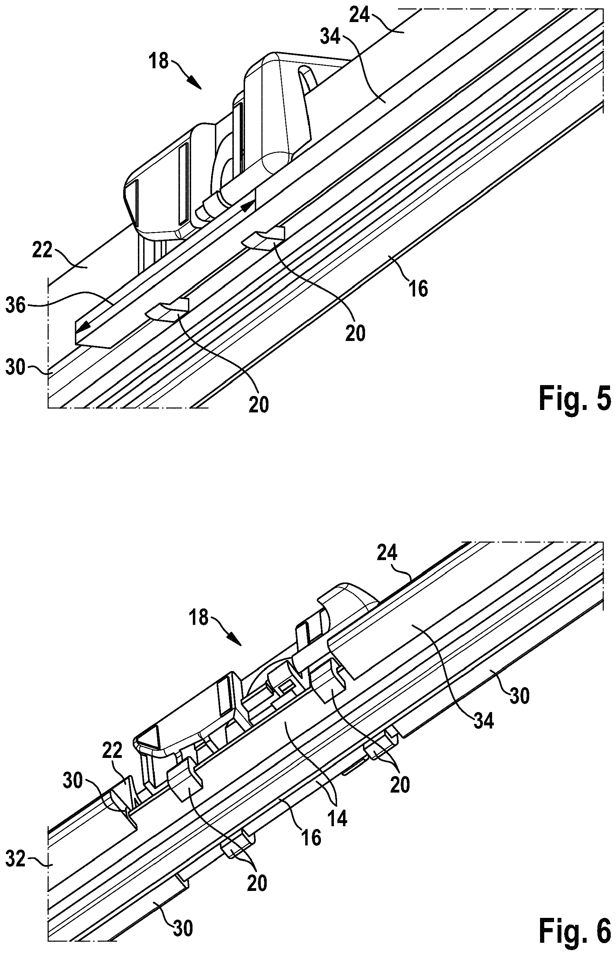

Die Ausführungen nach Fig. 1 und Fig. 2 sowie Fig. 3 zeigen nur an dem inneren Spoilerteil 22 jeweils eine Leitrippe 32, während die Ausführungen nach Fig. 4 und 5 eine entsprechende Leitrippe 34 an dem äußeren Spoilerteil 24 besitzen. Es ist jedoch auch möglich, dass sowohl an dem inneren Spoilerteil 22 als auch an dem äußeren Spoilerteile 24 Leitrippen 32, 34 vorgesehen sind (Fig. 6).

In vielen Fällen kann es ausreichen, dass nur in dem kritischen Bereich 36 des Anschlusselements 18 eine Leitrippe 40 vorgesehen ist, die in Form eines Verbindungsstücks 42 das innere Spoilerteil 22 mit dem äußeren Spoilerteil 24 im Bereich der Führungsprofile 30 miteinander verbindet. Das Verbindungsstück 42 steht seitlich über die Führungsprofile 30 vor, wobei an seinen Enden Übergänge 44 vorgesehen sind, die einen harmonischen Anschluss an die Führungsprofile 30 gewährleisten. Die Leitrippe 40 kann auch in Verbindung mit den Leitrippen 32 verwendet werden. In diesem Fall schließen sich die Übergänge 44 des Verbindungsstücks 42 an die äußeren Längsseiten der Leitrippen 32, 34 an.

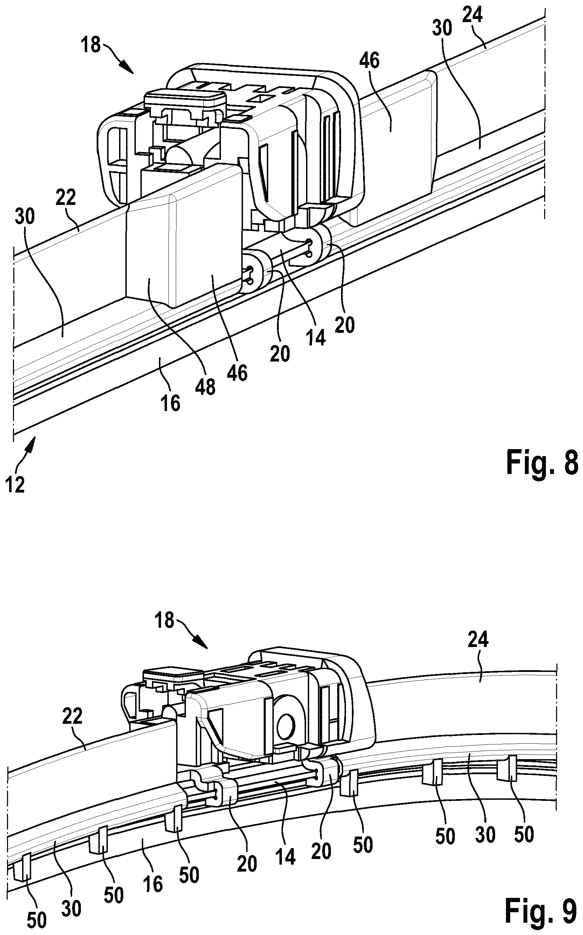

Die Ausführung nach Fig. 8 zeigt eine weitere Maßnahme das Aufsprühen von Wasser auf die Fahrzeugscheibe 17 bei der Abwärtsbewegung des Wischblatts 10 zu vermeiden, indem in Längsrichtung vor dem Verbindungselement 18 auf der Abströmseite 28 oberhalb der Führungsprofile 30 ein Füllstück 46 befestigt ist, das von der Abströmseite 28 der Spoilerteile 22, 24 bis zur äußeren Längsseite der Führungsprofile 30 bzw. der Leitrippen 32, 34 reicht. Dabei bilden die zu den Enden des Wischblatts 10 weisenden Stirnflächen der Füllstücke 46 Übergänge 48, die den Totraum zu den Abströmseiten der Spoilerteile 22, 24 hin ausfüllen, sodass sich in diesem Bereich keine nennenswerte Wassermenge ansammeln kann. Auch wird die Entstehung von Wirbeln verhindert.

Bei der Ausführung nach Fig. 9 sind an den Führungsprofilen 30 auf der Abströmseite 28 der Spoilerteile 22, 24 Stege 50 angeformt die in Längsrichtung des Wischblatts 10 mit Abständen zueinander angeordnet sind und senkrecht zur Fahrzeugscheibe 17 verlaufen. Die Anzahl und die Neigung der Stege 50 können je nach Anwendungsfall modifiziert werden. Außerdem können die Abstände zwischen den Stegen 50 entsprechend den Anforderungen variiert werden. Die Stege 50 können allein oder in Verbindung mit den Leitrippen 32, 34, 40 verwendet werden.

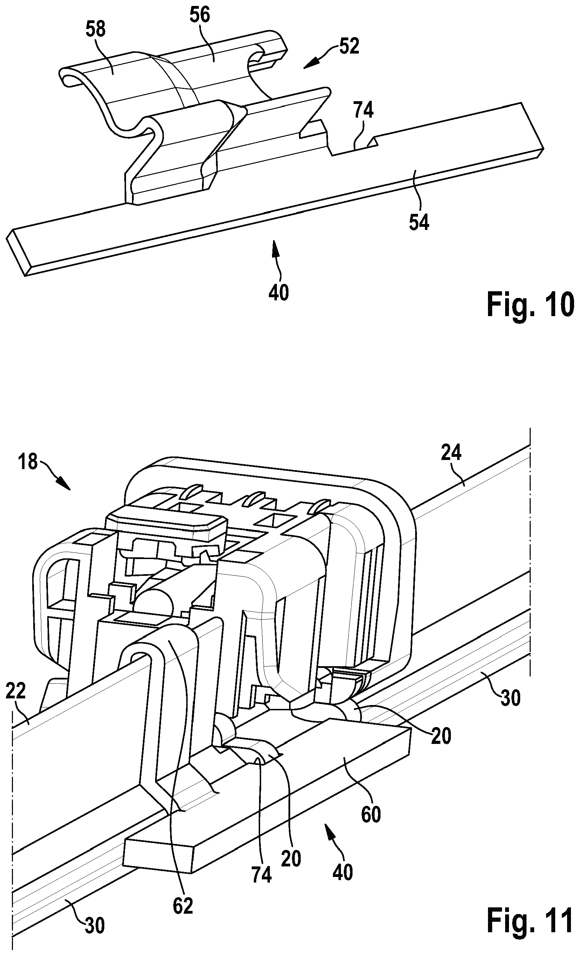

Die Ausführung nach Fig. 10 zeigt eine Leitrippe 40 in Form einer Verbindungsleiste 54, die Teil eines Verbindungsstücks 52 ist, das mittels Halteelementen in Form eines Anschlussprofils 58 an den Spoilerteilen 22, 24 angehängt ist und an die zugeordneten Führungsprofile 30 bzw. den zugeordneten Leitrippen 32, 34 anschließt. Das Verbindungsstück 52 besitzt außerdem im Anschluss an das Anschlussprofil 58 ein Übergangsprofil 56 zu den Konturen des Anschlusselements 18. Somit deckt das Übergangsprofil 56 mindestens teilweise das Anschlusselement 18 ab. Bei der Ausführungsform nach Fig. 11 wird die Leitrippe 40 durch eine Verbindungsleiste 60 gebildet, die mittels Halteelementen in Form von Haken 62 an den Spoilerteilen 22, 24 befestigt ist. An der inneren Längsseite der Verbindungsleisten 54, 60 sind Aussparungen 74 für die Krallen 20 des Anschlusselements 18 angeordnet.

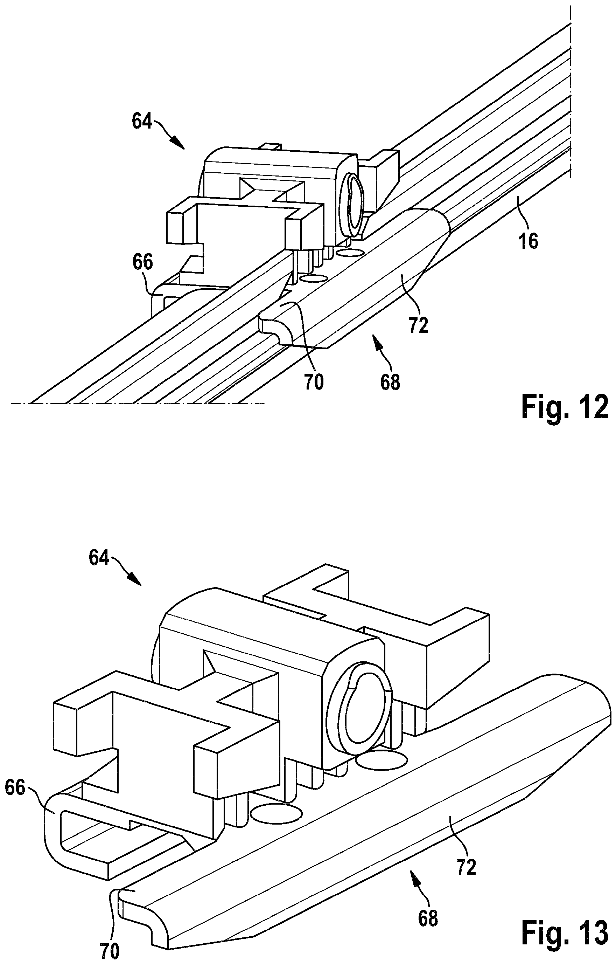

Bei der Ausführung nach Fig. 12 und 13 besitzt das Anschlusselement 64 zwei Führungsprofile 66 und 68 mit denen es auf dem Tragelement 14 geführt ist. Dabei ist das Führungsprofil 68 auf der Abströmseite 28 länger als das Führungsprofil 66 auf der Anströmseite 26. Es besitzt außerdem eine verbreiterte Deckwand 70, von der eine Schürze 72 an der äußeren Längsseite zur Wischlippe 16 hin abgewinkelt verläuft. Dadurch wird ebenfalls verhindert, dass sich angesammeltes Wasser als feiner Sprühstrahl auf die Fahrzeugscheibe niederschlägt. Das Anschlusselement 64 kann - wie das Verbindungsstück 52 - Anschlussprofile 58 besitzen, die in den Endbereichen der Führungsprofile 66, 68 an diese angeformt sind. Damit die Schürze 72 bei einer Schwenkbewegung während des Betriebs nicht an die Fahrzeugscheibe anstößt, ist sie im Bereich ihrer Enden in Längsrichtung abgeschrägt.

## Patentansprüche

1. Wischblatt (10) in Flachbalkenbauweise mit einer Wischleiste (12), die von einem bandartigen, federelastischen, zu einer Wischlippe (16) der Wischleiste (12) konkav vorgekrümmten Tragelement (14) gehalten wird, wobei an der der Wischlippe (16) abgewandten Seite des Tragelements (14) ein oder mehrere Spoilerteile (22, 23) insbesondere mittels Führungsprofilen (30) angebracht sind, die das Tragelement (14) von den äußeren Längsseiten umfassen und gegenüber der Abströmseite (26) des Spoilerteils (22, 23) ein Stück weit vorstehen und mit dieser eine Kehle (31) bilden, und wobei im mittleren Bereich des Wischblatts (10) ein Anschlusselement (18, 64) zum gelenkigen Verbinden eines Wischarms befestigt ist, wobei das Führungsprofil (30) auf der Abströmseite (26) an seiner nach außen weisenden Längsseite eine Leitrippe (32, 34, 40) aufweist, **dadurch gekennzeichnet, dass** in einem sich über das Anschlusselement (18) erstreckenden Bereich (36) ein Verbindungsstück (52) mit einer Verbindungsleiste (54, 60) eine Leitrippe (40) bildet, die in Längsrichtung zu beiden Seiten des Anschlusselements (18) mittels Halteelementen (58, 62) an den Spoilerteilen (22, 24) angehängt ist und an die zugeordneten Führungsprofile (30) bzw. den Leitrippen (34, 36) der Führungsprofile (30) anschließt.

2. Wischblatt (10) nach Anspruch 1, **dadurch gekennzeichnet, dass** der Spoiler zwei Spoilerteile (22, 24) umfasst, von denen ein inneres Spoilerteil (22) von einem inneren Ende des Wischblatts (10) bis zum Anschlusselement (18, 64) reicht, während sich ein äußeres Spoilerteil (24) von einem äußeren Ende des Wischblatts (10) bis zum Anschlusselement (18, 64) erstreckt, wobei eines oder beide Spoilerteile (22, 24) ein Führungsprofil (30) mit einer Leitrippe (32 bzw. 34) aufweisen.

3. Wischblatt (10) nach einem der vorhergehenden Ansprüche, **dadurch gekennzeichnet, dass** die Halteelemente als Anschlussprofile (58) für die angrenzenden Spoilerteile (22, 24) ausgebildet sind.

4. Wischblatt (10) nach Anspruch 3, **dadurch gekennzeichnet, dass** die Anschlussprofile (58) mit Übergangsprofilen (56) und der Verbindungsleiste (54) ein Verbindungsstück (52) bilden, das das Anschlusselement (18) zumindest teilweise abdeckt.

5. Wischblatt (10) nach einem der vorhergehenden Ansprüche, **dadurch gekennzeichnet, dass** die Oberseiten der Leitrippen (32, 34, 40) bündig mit den Oberseiten der Führungsprofile (30) abschließen.

6. Wischblatt (10) nach einem der vorhergehenden Ansprüche, **dadurch gekennzeichnet, dass** auf der Abströmseite (28) oberhalb der Führungsprofile (30) in Längsrichtung mindestens auf einer Seite des Anschlusselements (18) ein Füllstück (46) vorgesehen ist, das sich mit einem Übergang (48) an die Abströmseite des zugeordneten Spoilerteils (22, 24) anschließt und bis zur Längsseitenbegrenzung des zugeordneten Führungsprofils (30) oder der zugeordneten Leitrippe (32, 34) reicht.

7. Wischblatt (10) nach einem der vorhergehenden Ansprüche, **dadurch gekennzeichnet, dass** an den Führungsprofilen (30) auf der Abströmseite (28) Stege (50) angeformt sind, die in Längsrichtung des Wischblatts (10) mit Abständen zueinander angeordnet und zur Fahrzeugscheibe (17) gerichtet sind.

## Claims

1. Wiper blade (10) of flat bar construction, having a wiper strip (12) which is held by a band-like, resiliently elastic carrier element (14) which is pre-curved in a concave manner with respect to a wiper lip (16) of the wiper strip (12), wherein one or more spoiler parts (22, 23) are mounted, in particular by means of guide profiles (30), on that side of the carrier element (14) which faces away from the wiper lip (16), which spoiler parts enclose the carrier element (14) from the outer longitudinal sides and protrude to a small extent beyond the flow-off side (26) of the spoiler part (22, 23) and form, with said flow-off side, a fillet (31), and wherein an attachment element (18, 64) for the articulated connection of a wiper arm is fastened in the central region of the wiper blade (10), wherein the guide profile (30) on the flow-off side (26) has, on its outwardly pointing longitudinal side, a guiding rib (32, 34, 40), **characterized in that**, in a region (36) extending over the attachment element (18), a connecting piece (52) forms, by way of a connecting strip (54, 60), a guiding rib (40) which, in the longitudinal direction to both sides of the attachment element (18), and by way of retention elements (58, 62), is hooked onto the spoiler parts (22, 24) and adjoins the associated guide profiles (30) or the guiding ribs (34, 36) of the guide profiles (30).

2. Wiper blade (10) according to Claim 1, **characterized in that** the spoiler comprises two spoiler parts (22, 24), of which an inner spoiler part (22) extends from an inner end of the wiper blade (10) to the attachment element (18, 64), whereas an outer spoiler part (24) extends from an outer end of the wiper blade (10) to the attachment element (18, 64), wherein one or both spoiler parts (22, 24) has/have a guide profile (30) with a guiding rib (32 or 34 respectively).

3. Wiper blade (10) according to either of the preceding claims, **characterized in that** the retention elements are in the form of attachment profiles (58) for the adjoining spoiler parts (22, 24).

4. Wiper blade (10) according to Claim 3, **characterized in that** the attachment profiles (58) form, with transition profiles (56) and the connecting strip (54), a connecting piece (52) which at least partially covers the attachment element (18).

5. Wiper blade (10) according to any of the preceding claims, **characterized in that** the top sides of the guiding ribs (32, 34, 40) terminate flush with the top sides of the guide profiles (30).

6. Wiper blade (10) according to any of the preceding claims, **characterized in that**, on the flow-off side (28), above the guide profiles (30), and at least on one side of the attachment element (18) in the longitudinal direction, a filler piece (46) is provided which, by way of a transition (48), adjoins the flow-off side of the associated spoiler part (22, 24) and extends as far as the longitudinal-side delimitation of the associated guide profile (30) or of the associated guiding rib (32, 34).

7. Wiper blade (10) according to any of the preceding claims, **characterized in that** webs (50) are integrally formed on the guide profiles (30) on the flow-off side (28), which webs are arranged spaced apart from one another in the longitudinal direction of the wiper blade (10) and are oriented towards the vehicle window (17) .

## Revendications

1. Balai d'essuie-glace (10) à construction en forme de barre plate comportant une raclette de balai d'essuie-glace (12) qui est retenue par un élément de support (14) de type bande, élastique, pré-courbé de manière concave par rapport à une lèvre de balai d'essuie-glace (16) de la raclette de balai d'essuie-glace (12), dans lequel une ou plusieurs parties de déflecteur (22, 23) sont montées en particulier au moyen de profilés de guidage (30) sur le côté de l'élément de support (14) opposé à la lèvre de balai d'essuie-glace (16), lesquelles parties de déflecteur entourent l'élément de support (14) à partir des côtés longitudinaux extérieurs et font saillie quelque peu par rapport au côté aval (26) de la partie de déflecteur (22, 23) et forment avec celle-ci un congé (31), et dans lequel un élément de raccordement (18, 64) servant à la liaison articulée d'un bras d'essuie-glace est fixé dans la région centrale du balai d'essuie-glace (10), dans lequel le profilé de guidage (30) comprend, sur le côté aval (26), une nervure de guidage (32, 34, 40) sur son côté longitudinal tourné vers l'extérieur, **caractérisé en ce que**, dans une région (36) s'étendant sur l'élément de raccordement (18), une pièce de liaison (52) forme, par une baguette de liaison (54, 60), une nervure de guidage (40) qui est accrochée aux parties de déflecteur (22, 24) au moyen d'éléments de retenue (58, 62) des deux côtés de l'élément de raccordement (18) dans la direction longitudinale et se raccorde aux profilés de guidage associés (30) ou aux nervures de guidage (34, 36) des profilés de guidage (30).

2. Balai d'essuie-glace (10) selon la revendication 1, **caractérisé en ce que** le déflecteur comprend deux parties de déflecteur (22, 24), parmi lesquelles une partie de déflecteur intérieure (22) s'étend à partir d'une extrémité intérieure du balai d'essuie-glace (10) jusqu'à l'élément de raccordement (18, 64), tandis qu'une partie de déflecteur extérieure (24) s'étend à partir d'une extrémité extérieure du balai d'essuie-glace (10) jusqu'à l'élément de raccordement (18, 64), l'une des parties de déflecteur (22, 24) ou les deux comprenant un profilé de guidage (30) doté d'une nervure de guidage (32 ou 34).

3. Balai d'essuie-glace (10) selon l'une des revendications précédentes, **caractérisé en ce que** les éléments de retenue sont réalisés sous forme de profilés de raccordement (58) pour les parties de déflecteur (22, 24) adjacentes.

4. Balai d'essuie-glace (10) selon la revendication 3, **caractérisé en ce que** les profilés de raccordement (58) forment, avec des profilés de transition (56) et la baguette de liaison (54), une pièce de liaison (52) qui recouvre au moins partiellement l'élément de raccordement (18).

5. Balai d'essuie-glace (10) selon l'une des revendications précédentes, **caractérisé en ce que** les côtés supérieurs des nervures de guidage (32, 34, 40) se terminent en affleurement avec les côtés supérieurs des profilés de guidage (30).

6. Balai d'essuie-glace (10) selon l'une des revendications précédentes, **caractérisé en ce que**, sur le côté aval (28), au-dessus des profilés de guidage (30), au moins sur un côté de l'élément de raccordement (18) dans la direction longitudinale, une pièce de remplissage (46) est prévue, laquelle se raccorde par une transition (48) au côté aval de la partie de déflecteur associée (22, 24) et s'étend jusqu'à la limite de côté longitudinal du profilé de guidage associé (30) ou de la nervure de guidage associée (32, 34).

7. Balai d'essuie-glace (10) selon l'une des revendications précédentes, **caractérisé en ce que** des nervures (50) sont formées sur les profilés de guidage (30) sur le côté aval (28), lesquelles nervures sont disposées à distance les unes des autres dans la direction longitudinale du balai d'essuie-glace (10) et sont orientées vers la vitre de véhicule (17).
